# EUROPÄISCHE PATENTSCHRIFT

(11) **EP 0 655 820 B1**
(45) Veröffentlichungstag und Bekanntmachung des Hinweises auf die Patenterteilung: **23.04.1997**
(21) Anmeldenummer: 94110614.8
(22) Anmeldetag: 07.07.1994
(51) Int. Cl.: H02H 3/33

(54) **Fehlerstromschutzschalter**
Ground fault circuit interrupter
Disjoncteur de défaut à la terre

(30) Priorität: 30.11.1993 DE 4340737
(43) Veröffentlichungstag der Anmeldung: 31.05.1995
(73) Patentinhaber: HEINRICH KOPP AG, D-63796 Kahl am Main (DE)
(72) Erfinder: Fleckenstein, Hans-Jürgen, D-63776 Schimborn (AU); Holscher Norbert, D-63477 Maintal (AU)
(74) Vertreter: Reinhard - Skuhra - Weise & Partner

(56) Entgegenhaltungen:
- EP-A- 0 220 408
- US-A- 3 786 356
- US-A- 4 833 564

## Beschreibung

Die Erfindung betrifft einen Fehlerstromschutzschalter, insbesondere zur Isolationsüberwachung elektrischer Stromkreise, gemäß dem Oberbegriff des Patentanspruchs 1.

Ein Fehlerstromschutzschalter der eingangs genannten Art ist aus der EP 220 408 bekannt. Dieser Fehlerstromschutzschalter basiert auf der Verwendung einer zusätzlichen Wicklung am Summenstromwandler, mittels welcher eine selbständige Überwachung durch Einspeisung periodisch kurzzeitiger Stromstöße vorgenommen wird.

Ein Fehlerstromschutzschalter mit Summenstromwandler und zusätzlicher Wicklung, bei dem die Empfindlichkeit der Fehlerstromerfassung davon abhängig ist, ob sich ein Fehlerstrom zwischen Stromkreis-Rückleitung und Erde ausgebildet hat, ist aus der US 3,786,356 bekannt. Bei diesem Fehlerstromschutzschalter ist eine Wechselstromquelle vorgesehen, die über ein Gatter ein Wechselstromsignal auf die zusätzliche Wicklung legt, welches über eine Sekundärwicklung, einen Verstärker und eine Grenzwertschaltung erfaßt wird.

Den bekannten Fehlerstromschutzschaltern haftet der Nachteil an, daß eine zusätzliche Wicklung neben der durch die Phasenleiter und neutralen Leiter gebildeten Primärwicklung und der Sekundärwicklung vorgesehen werden muß, über welche eine Fehlerstromsimulation bewirkt wird.

Die Erfindung bezieht sich auf einen Fehlerstromschutzschalter der eingangs genannten Art, bei dem die Sekundärwicklung über einen Verstärker und eine Grenzwertschaltung ein auf Hauptschaltkontakte einwirkendes Relais derart steuert, daß eine Überwachung unterbrochener, überbrückter oder von der Toleranz abweichender Komponenten und deren Bauteile gewährleistet ist.

Der Erfindung liegt die Aufgabe zugrunde, einen Fehlerstromschutzschalter zu schaffen, der sich während der Betriebsdauer selbst überwacht und der einen einfachen Aufbau hat.

Diese Aufgabe wird erfindungsgemäß durch die im kennzeichnenden Teil des Patentanspruchs 1 angegebenen Merkmale gelöst.

Weitere Ausgestaltungen der Erfindung ergeben sich aus den Unteransprüchen.

Die Erfindung schafft einen Fehlerstromschutzschalter, bei dem die Schwingungsfrequenz für eine Schaltstufe aus dem Netz zugeführt wird, so daß die Schaltstufe selbständig und unabhängig davon, ob die Schaltkontakte geöffnet oder geschlossen sind, schwingt. Ein wesentlicher Vorteil besteht darin, daß für die Selbstüberwachung ein ständig fließender Fehlerstrom erzeugt wird, durch den die Elektronik des Fehlerstromschutzschalters überwacht wird, derart, daß bei einem Defekt eines Bauteils durch die Grenzwertschaltung und die Schaltstufe das den Schaltkontakten zugeordnete Relais deaktiviert wird bzw. abfällt und der Fehlerstromschutzschalter abgeschaltet wird.

Bei einer bevorzugten Ausführungsform des Fehlerstromschutzschalters entfällt die Notwendigkeit, einen Prüfwiderstand vorzusehen, da der Taster- bzw. Prüfschalter als Öffnertaste in Reihe zu einem Widerstand den ständig am Summenstromwandler vorbeifließenden Strom schaltet.

Vorteilhafterweise fließt der Fehlerstrom auch dann, wenn die Schaltkontakte des Hauptschalters noch geöffnet sind.

Gemäß der Erfindung erfolgt die Überwachung durch den Fehlerstromschutzschalter mit einer niedrigen Frequenz, vorzugsweise der Netzfrequenz.

Im folgenden wird der erfindungsgemäße Fehlerstromschutzschalter anhand der Zeichnung beschrieben. Es zeigen:
- Fig. 1: ein Blockschaltbild des erfindungsgemäßen Fehlerstromschutzschalters, und
- Fig. 2: Einzelheiten einer bevorzugten Ausführungsform des Fehlerstromschutzschalters.

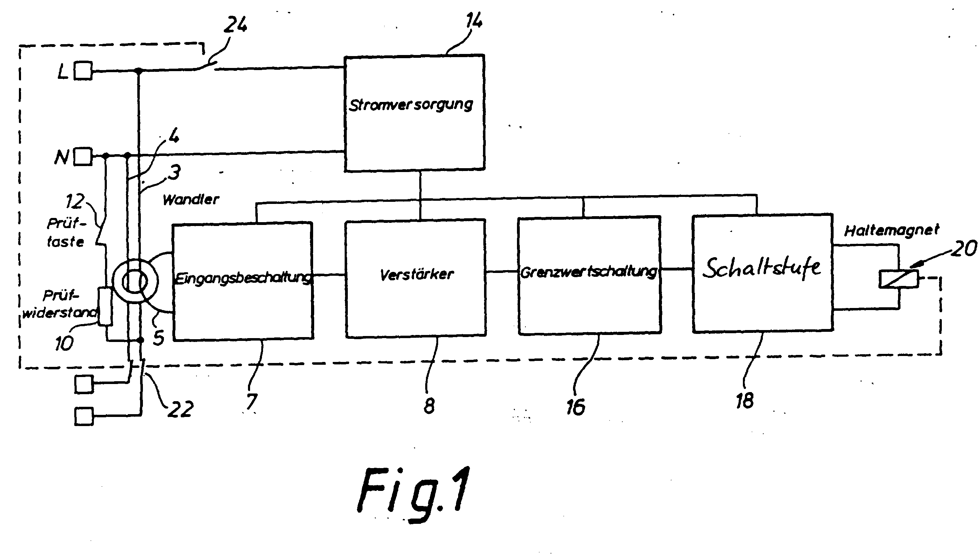

Gemäß Fig. 1 weist der erfindungsgemäße Fehlerstromschutzschalter einen Summenstromwandler 1 auf, dessen Primärwicklung durch Phasen und neutrale Leiter gebildet ist, die mit 3,4 bezeichnet sind. Neben der Primärwicklung 3,4 ist eine Sekundärwicklung 5 vorgesehen, die zu einem Eingangskreis 7 führt, an welchen ein Verstärker 8 angeschlossen ist.

Der Ausgang des Verstärkers 8 ist mit einer Grenzwertschaltung 16 verbunden, deren Ausgangssignal wiederum einer Schaltstufe 18 zugeführt wird. Die Schaltstufe 18 ist an einen Haltemagneten 20 geschaltet. Weiterhin ist eine Stromversorgung vorgesehen, die über einen Hilfsschalter 24 am Netz schaltbar ist. Die Stromversorgung 14 speist den Eingangskreis 7, den Verstärker 8, die Grenzwertschaltung 16 und die Schaltstufe 18.

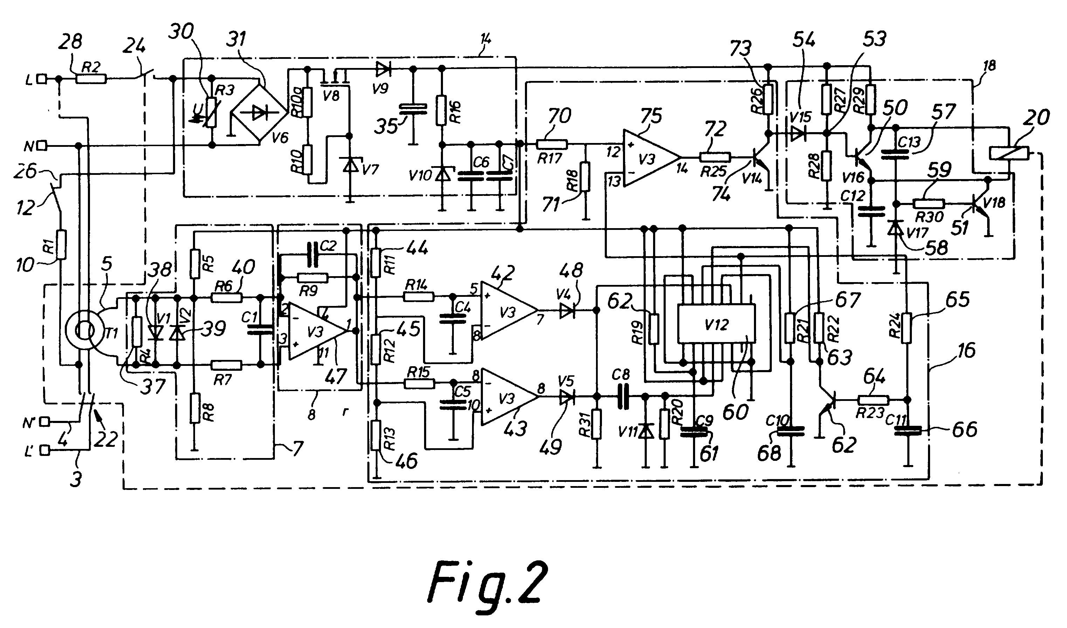

An den Leiter 4 ist ein Widerstand 10 angeschlossen, zu dem in Reihe ein Tasterschalter 12 liegt, wie in Fig. 2 im einzelnen gezeigt ist. Die Reihenschaltung aus Widerstand 10 und Tasterschalter 12 ist mit einem Spannungsspeisekreis 14 verbunden, welche ihrerseits mit dem Verstärker 8, der Grenzwertschaltung 16 und der Schaltstufe 18 verbunden ist. Die Grenzwertschaltung 16 empfängt eingangsseitig das Ausgangssignal des Verstärkers 8 und liefert ihr Ausgangssignal an die Schaltstufe 18. Die Schaltstufe 18 ist mit dem Relais 20 verbunden, das die Schaltkontakte 22 bzw. 24 steuert.

Der Spannungsspeisekreis 14 enthält einen Hilfsschalter 24, der mit dem Hauptschalter 22 gekoppelt ist, derart, daß der Hauptschalter 22 zeitlich verzögert zum Hilfsschalter 24 schließt.

Der Tasterschalter 12 dient als Prüftaste zum Öffnen der Verbindung zwischen dem Leiter 4, dem Hilfsschalter 24 und dem Leiter 3.

Bei geschlossenem Tasterschalter 12 fließt über den Widerstand 10 und den Tasterschalter 12 ständig ein Fehlerstrom am Summenstromwandler vorbei, wodurch das Erfordernis eines zusätzlichen Prüfwiderstandes entfällt. Wenn jedoch ein zusätzlicher Prüfwiderstand verwendet wird, kann der Widerstand 10 auch zwischen dem Leiter H, über den Hilfsschalter 24 an den Leiter 3 geschaltet sein.

Aus Fig. 1 und Fig. 2 ist ersichtlich, daß bei geschlossenem Hilfsschalter 24 der Spannungsspeisekreis 14 an das Netz gelegt ist.

Einzelheiten einer bevorzugten Ausführungsform des erfindungsgemäßen Fehlerstromschutzschalters sind in Fig. 2 dargestellt.

Wie sich aus Fig. 2 ergibt, befindet sich hinter dem Widerstand 10 der Tasterschalter 12, der an einen Anschluß 26 geschaltet ist, von welchem der Hilfsschalter 24 die Verbindung zum Phasenleiter herstellt. Der Spannungsspeisekreis 14 weist einen Widerstand 28 auf, der als Eingangswiderstand zu den übrigen Bauteilen des Spannungsspeisekreises 14 dient. Der Spannungsspeisekreis 14 enthält unter anderem einen variablen Widerstand 30, einen Brükkengleichrichter 31 sowie einen Kondensator 35, wie dies in Fig. 2 detailliert dargestellt ist.

Der Eingangskreis 7 besteht im wesentlichen aus einer Parallelschaltung aus einem Widerstand 37, Dioden 38, 39 und einem RC-Glied 40.

Die Dioden 38,39 sind zueinander entgegengesetzt geschaltet.

Sowohl der Eingangskreis 7 als auch der Verstärker 8, die Grenzwertschaltung 16 und die Schaltstufe 18 sind an den Ausgang des Spannungsspeisekreises 14 angeschlossen.

Die Grenzwertschaltung 16 hat die Form eines Fensterkomperators und weist Operationsverstärker 42,43 auf, die als Spannungskomperatoren arbeiten. Die Schaltpunkte der Operationsverstärker sind durch Widerstände 44,45,46 so eingestellt, daß die Vergleichsspannungen geringfügig von der Gleichspannung am Ausgang des Verstärkers 8, der im wesentlichen durch einen Operationsverstärker 47 gebildet ist, abweichen und symmetrisch liegen. Hierbei liegen die Ausgangssignale der Verstärker 42,43 auf 0 Volt, wenn das Wechselsignal zu klein ist. Überschreitet das Wechselsignal am Eingang der Grenzwertschaltung 16 die eingestellten Schaltpunkte, wechseln die Ausgänge der Verstärker 42,43 auf nahezu Betriebsspannung. Der Verstärker 42 erzeugt eine Ausgangsspannung, wenn die positive Halbwelle des Wechselsignals den Schaltpunkt überschreitet und der Operationsverstärker 43 liefert ein Ausgangssignal, wenn die negative Halbwelle des Wechselsignals abläuft.

Durch die Verknüpfung der Ausgänge der Verstärker 42,43 über Dioden 48,49 wird ein Rechtecksignal erzeugt, das vorzugsweise alle 10 ms einen Impuls liefert, wenn der vorgesehene Prüfstrom durch den Widerstand 10 fließt.

Die Impulse werden einer Auswertelogik 60 zugeführt, welche eine Auswertüng der Impulslänge durchführt. Die Impulslänge ist abhängig von der Höhe des Fehlerstromes. Die Auswertelogik 60 liefert an ihrem Ausgang ständig kurze Impulse, wenn die Eingangsimpulse in ihrer Länge kleiner sind als ein voreingestellter Wert. Der Wert kann durch einen Kondensator 61 und einen Widerstand 62 eingestellt werden. Die kurzen Impulse werden durch einen Transistor 62 sowie Widerstände 63 bis 65 und einen Kondensator 66 erzeugt. Ist die Länge eines Eingangsimpulses der Auswertelogik 60 größer als der eingestellte Wert, d.h. überschreitet der Fehlerstrom einen vorgegebenen Auslösewert, liefert die Auswertelogik 60 am Ausgang einen langen Impuls. Die Länge des Impulses kann über einen Widerstand 67 und einen Kondensator 68 eingestellt werden und wird so bemessen, daß die Schaltstufe 18 im Falle der Überschreitung des Auslösewertes durch den Fehlerstrom nicht mehr schwingt und somit das Relais 20 entregt wird. Die Ausgangsimpulse der Auswertelogik 60 werden einem Pegelwandler, bestehend aus Widerständen 70, 71 und 72, 73 sowie einem Transistor 74 und einem Operationsverstärker 75, zugeführt. Der Pegelwandler ist erforderlich, da die Schaltstufe 18 mit einer höheren Spannung versorgt wird als der Eingangskreis 7, Verstärker 8 und die Grenzwertschaltung 16. Zur Beschaltung des Pegelwandlers wird ausdrücklich auf Fig. 2 verwiesen.

Die Schaltstufe 18 weist gemäß einer bevorzugten Ausführungsform elektronische Schalter 50,51 auf. Die Schaltstufe 18 schwingt, wenn er konstant durch Impulse angestoßen wird, die infolge der Netzfrequenz an dem in Fig. 2 mit 53 bezeichneten, ausgangsseitig einer Diode 54 befindlichen Schaltpunkt auftreten. Fällt der Impuls am Schaltpunkt 53 aus, dann fällt die Schaltstufe 18 außer Tritt und das Relais 20 fällt ab. Fällt einer der elektronischen Schalter 50,51 durch einen Defekt aus, wird die Schwingung ebenfalls beendet und der Stromfluß durch das Relais wird unterbrochen bzw. auf einen derart kleinen Wert begrenzt, daß die Magnetkraft des Relais nicht ausreicht, um die Schaltkontakte bzw. Hauptschaltkontakte 22 geschlossen zu halten.

Elektronische Schalter vorzugsweise in Form von Schalttransistoren 50, 51 der Schaltstufe 18 sind derart geschaltet, daß die Schalteinrichtung 50 als Schalter parallel zum Relais 20 und die Schalteinrichtung 51 in Reihe zum Relais 20 liegt. Die beiden Schalter 50, 51 überwachen sich somit gegenseitig, wofür die von der Grenzwertschaltung 16 bzw. deren Auswertelogik 60 abgegebenen kurzen Impulse verwendet werden.

Bei der in Fig. 2 gezeigten Ausführungsform ist der Kollektor des Transistors 50 mit dem Relais 20 und über einen Kondensator 57 an einem Widerstand 59 einerseits und über eine Diode 58 an Masse andererseits geschaltet. Der Widerstand 59 ist ein Basiswiderstand des Transistors 51.

Die Auswertelogik 60 der Grenzwertschaltung 16 erzeugt ausgangsseitig nur kurze Spannungsimpulse, solange der Auslöse-Fehlerstrom unterhalb eines vorbestimmten Auslösewertes liegt, während die Auswertelogik 60 bei Überschreiten des Auslösewertes durch den Fehlerstrom solange keinen Spannungsausgang liefert, bis über das Relais 20 die Hauptschaltkontakte 20 geöffnet werden. Der Auslösewert wird gemäß einer bevorzugten Ausführungsform der Erfindung durch die Widerstände 44, 45, 46 bestimmt.

Die Überwachung wird gemäß der Erfindung mit einer Frequenz vorgenommen, die z.B. der Netzfrequenz oder einer anderen niedrigen Frequenz entspricht.

Gemäß der Erfindung wird damit eine Selbstüberwachung bei ständig fließendem Fehlerstrom und bei niedriger Frequenz sichergestellt ohne Einsatz einer zusätzlichen Wicklung zur Einspeisung eines Fehlerstroms in den Summenstromwandler.

Die Schaltstufe 18 wird über die Schwingungsfrequenz aus dem Netz, nämlich über den Widerstand 10 und den Prüfschalter 12 gespeist. Wesentlich ist, daß die Schaltstufe 18 selbständig anschwingt, auch wenn die Schaltkontakte des Hauptschalters 22 geöffnet sind, da über den Widerstand 10 und den Prüfschalter 12 eine Spannung über den Speisespannungskreis 14 an die Schaltstufe 18 angelegt wird. Somit ist die Netzfrequenz der eigentliche Impulsgeber für die Schaltstufe, das heißt, es ist kein Schwingkreis erforderlich. Bei Unterbrechung der aus der Netzfrequenz abgeleiteten Impulse als Folge eines Öffnens der Schaltkontakte des Schalters 22 wird das Relais 20 dauerhaft entregt.

Aus vorstehender Beschreibung ergibt sich, daß sich die Schaltung des erfindungsgemäßen Fehlerstromschutzschalters selbst überwacht. Bei Ausfall eines für die Fehlerstromschutzschalterauslösung wesentlichen Bauteiles wird der Stromfluß durch das Relais 20 unterbrochen, so daß dieses abfällt und die Hauptschaltkontakte 22 geöffnet werden.

## Patentansprüche

1. Fehlerstromschutzschalter, insbesondere zur Isolations überwachung elektrischer Stromkreise, mit einem Summenstromwandler (1), der eine aus Phasenleiter (L) und neutralem Leiter (N) gebildete Primärwicklung (3, 4) und eine Sekundärwicklung (5) aufweist, die über einen Verstärker (8) und eine Grenzwertschaltung (16) ein auf Schaltkontakte (22) einwirkendes Relais (20) steuert, dadurch gekennzeichnet,
daß zwischen der Grenzwertschaltung (16) und dem Relais (20) eine Schaltstufe (18) vorgesehen ist, die mit einem Spannungsspeisekreis (14) verbunden ist, und daß ein Widerstand (10) zwischen dem Phasenleiter (L) und dem zum Spannungsspeisekreis (14) führenden Neutralleiter (N) des Netzes vorgesehen ist, so daß ein ständig durch die Primärwicklung (3, 4) fließender Fehlerstrom zum Widerstand (10) erzeugt wird, der in der Sekundärwicklung (5) des Summenstromwandlers (1) ein niederfrequentes Signal erzeugt, das die Schaltstufe (18) über eine Eingangsbeschaltung (7), den Verstärker (8) und die Grenzwertschaltung (16) schaltet.

2. Fehlerstromschutzschalter nach Anspruch 1,
dadurch gekennzeichnet,
daß die Grenzwertschaltung (16) bei einer Fehlerstromamplitude, die unterhalb eines vorbestimmten Auslösewertes liegt, ein Steuersignal über die Schaltstufe (18) an das Relais (20) zum Geschlossenhalten der Schaltkontakte (22) anlegt.

3. Fehlerstromschutzschalter nach einem der vorangehenden Ansprüche,
dadurch gekennzeichnet,
daß die Grenzwertschaltung (16) bei einer Fehlerstromamplitude, die oberhalb des vorbestimmten Auslösewertes liegt, ein Steuersignal über die Schaltstufe (18) an das Relais (20) zum Öffnen der Schaltkontakte (22) anlegt.

4. Fehlerstromschutzschalter nach einem der vorangehenden Ansprüche,
dadurch gekennzeichnet,
daß die Schaltstufe (18) unabhängig von der Schaltstellung der Schaltkontakte (22) selbständig anschwingt.

5. Fehlerstromschutzschalter nach einem der vorangehenden Ansprüche,
dadurch gekennzeichnet,
daß die Grenzwertschaltung (16) aus zwei Operationsverstärkern (42, 43) besteht, deren Ausgänge über jeweils eine Diode (48, 49) zusammengeschaltet sind.

6. Fehlerstromschutzschalter nach einem der vorangehenden Ansprüche,
dadurch gekennzeichnet,
daß die Grenzwertschaltung (16) an ihrem Ausgang einen Pegelwandler (70-75) aufweist, über den die Schaltstufe (18) mit der Grenzwertschaltung (16) und dem Spannungsspeisekreis (14) verbunden ist.

7. Fehlerstromschutzschalter nach einem der vorangehenden Ansprüche,
dadurch gekennzeichnet,
daß das durch die Grenzwertschaltung (16) erzeugte Steuersignal aus einer Folge kurzer Impulse besteht.

8. Fehlerstromschutzschalter nach einem der vorangehenden Ansprüche,
dadurch gekennzeichnet,
daß der Widerstand (10) in Reihe mit einem Prüfschalter (12) geschaltet ist, durch den der ständig fließende Fehlerstrom unterbrechbar ist.

9. Fehlerstromschutzschalter nach einem der vorangehenden Ansprüche,
dadurch gekennzeichnet,
daß der Spannungsspeisekreis (14) über einen Hilfsschalter (24) mit dem Phasenleiter. (L) verbunden ist.

10. Fehlerstromschutzschalter nach einem der vorangehenden Ansprüche,
dadurch gekennzeichnet,
daß die Schaltstufe (18) elektronische Schalter (50, 51) aufweist, wobei der erste elektronische Schalter (50) parallel und der zweite elektronische Schalter (51) in Reihe zu dem Relais (20) geschaltet ist.

## Claims

1. Fault current protection switch, particularly for the isolation-monitoring of electrical current circuits, having a summation current transformer (1) which has a primary winding (3, 4) formed from a phase conductor (L) and a neutral conductor (N) and a secondary winding (5) which controls, via an amplifier (8) and a limit value circuit (16), a relay (20) acting on switching contacts (22),
characterised in that
a switching stage (18) which is connected to a voltage supply circuit (14) is provided between the limit value circuit (16) and the relay (20) and that a resistor (10) is provided between the phase conductor (L) and the neutral conductor (N), which leads to the voltage supply circuit (14), of the mains, so that there is generated, at the resistance (10), a fault current which constantly flows through the primary winding (3, 4) and generates, in the secondary winding (5) of the summation current transformer (1), a low-frequency signal which switches the switching stage (18) via input wiring (7), the amplifier (8) and the limit value circuit (16).

2. Fault current protection switch according to claim 1,
characterised in that,
in the event of a fault current amplitude which lies below a predetermined triggering value, the limit value circuit (16) applies a control signal, via the switching stage (18), to the relay (20) for the purpose of keeping the switching contacts (22) closed.

3. Fault current protection switch according to one of the preceding claims,
characterised in that,
in the event of a fault current amplitude which lies above the predetermined triggering value, the limit value circuit (16) applies a control signal, via the switching stage (18), to the relay (20) for the purpose of opening the switching contacts (22).

4. Fault current protection switch according to one of the preceding claims,
characterised in that,
the switching stage (18) starts oscillation independently, irrespective of the switching position of the switching contacts (22).

5. Fault current protection switch according to one of the preceding claims,
characterised in that
the limit value circuit (16) consists of two operational amplifiers (42, 43), the outputs of which are connected together via a diode (48, 49) in each case.

6. Fault current protection switch according to one of the preceding claims,
characterised in that
the limit value circuit (16) has, at its output, a level-converter (70-75) via which the switching stage (18) is connected to the limit value circuit (16) and the voltage supply circuit (14).

7. Fault current protection switch according to one of the preceding claims,
characterised in that
the control signal generated by the limit value circuit (16) consists of a succession of short pulses.

8. Fault current protection switch according to one of the preceding claims,
characterised in that
the resistor (10) is connected in series with a test switch (12) by means of which the constantly flowing fault current can be interrupted.

9. Fault current protection switch according to one of the preceding claims,
characterised in that
the voltage supply circuit (14) is connected via an auxiliary switch (24) to the phase conductor (L).

10. Fault current protection switch according to one of the preceding claims,
characterised in that
the switching stage (18) has electronic switches (50, 51), the first electronic switch (50) being connected in parallel, and the second electronic switch (51) in series, to the relay (20).

## Revendications

1. Disjoncteur à courant de défaut, en particulier pour le contrôle de l'isolation de circuits électriques, équipé d'un transformateur de courant totalisateur (1), qui présente un enroulement primaire (3, 4) constitué d'un fil de phase (L) et d'un fil neutre (N) et un enroulement secondaire (5) qui commande un relais (20) agissant sur des contacts de commutation (22) par l'intermédiaire d'un amplificateur (8) et d'un circuit de valeurs limites (16), caractérisé en ce que, entre le circuit de valeurs limites (16) et le relais (20), il est prévu un étage de commutation (18) qui est relié à un circuit d'alimentation en tension (14) et en ce qu'une résistance (10) est prévue entre le fil de phase (L) et le fil neutre (N) du réseau allant au circuit d'alimentation en tension (14), de sorte qu'il est généré un courant de défaut circulant en permanence dans l'enroulement primaire (3, 4) pour la résistance (10) qui génère dans l'enroulement secondaire (5) du convertisseur de courant totalisateur (1) un signal de basse fréquence qui commute l'étage de commutation (18) par un câblage d'entrée (7), l'amplificateur (8) et le circuit de valeurs limites (16).

2. Disjoncteur à courant de défaut selon la revendication 1, caractérisé en ce que, pour une amplitude de courant de défaut inférieure à une valeur de déclenchement prédéfinie, le circuit de valeurs limites envoie au relais (20) un signal de commande par l'intermédiaire de l'étage de commutation (18) pour maintenir les contacts de commutation (22) en position fermée.

3. Disjoncteur à courant de défaut selon l'une quelconque des revendications précédentes, caractérisé en ce que, pour une amplitude de courant de défaut supérieure à la valeur de déclenchement prédéfinie, le circuit de valeurs limites envoie un signal de commande au relais (20) par l'intermédiaire de l'étage de commutation (18) pour ouvrir les contacts de commutation (22).

4. Disjoncteur à courant de défaut selon l'une quelconque des revendications précédentes, caractérisé en ce que l'étage de commutation (18) amorce automatiquement indépendamment de la position de commutation des contacts de commutation (22).

5. Disjoncteur à courant de défaut selon l'une quelconque des revendications précédentes, caractérisé en ce que le circuit de valeurs limites (6) comprend deux amplificateurs opérationnels (42, 43) dont les sorties sont interconnectées chacune par une diode (48, 49).

6. Disjoncteur à courant de défaut selon l'une quelconque des revendications précédentes, caractérisé en ce que le circuit de valeurs limites (16) présente à sa sortie un convertisseur de niveau (70-75) par lequel l'étage de commutation (18) est relié au circuit de valeurs limites (16) et au circuit d'alimentation en tension (14).

7. Disjoncteur à courant de défaut selon l'une quelconque des revendications précédentes, caractérisé en ce que le signal de commande généré par le circuit de valeurs limites (16) comprend une séquence de brèves impulsions.

8. Disjoncteur à courant de défaut selon l'une quelconque des revendications précédentes, caractérisé en ce que la résistance (10) est montée en série avec un commutateur de test (12) qui permet d'interrompre le courant de défaut circulant en permanence.

9. Disjoncteur à courant de défaut selon l'une quelconque des revendications précédentes, caractérisé en ce que le circuit d'alimentation en tension (14) est relié par un commutateur auxiliaire (24) au fil de phase (L).

10. Disjoncteur à courant de défaut selon l'une quelconque des revendications précédentes, caractérisé en ce que l'étage de commutation (18) présente des commutateurs (50, 51) électroniques, le premier commutateur (50) électronique étant monté en parallèle avec le relais (20) et le deuxième commutateur (51) étant monté en série avec le relais (20).
